# EUROPÄISCHE PATENTSCHRIFT

(11) **EP 1 855 022 B1**
(45) Veröffentlichungstag und Bekanntmachung des Hinweises auf die Patenterteilung: **07.10.2009**
(21) Anmeldenummer: 07106885.2
(22) Anmeldetag: 25.04.2007
(51) Int. Cl.: F16D 48/06

(54) **Verfahren zum Betrieb einer automatischen Kupplungsvorrichtung**
Method for the operation of an automatic clutch apparatus
Procédé et opération d'un appareil à embrayage automatique

(30) Priorität: 12.05.2006 US 433819
(43) Veröffentlichungstag der Anmeldung: 14.11.2007
(73) Patentinhaber: ZF Friedrichshafen AG, 88038 Friedrichshafen (DE)
(72) Erfinder: Sayman, Anthony Robert, 88074 Meckenbeuren (DE); Herter, Peter, 88212 Ravensburg (DE); Kramer, Rupert, 88046 Friedrichshafen (DE); DeVore, James Henry, Metamora, IL 61548 (US); Muetzel, Ronald, Lake Zurich, IL 60047 (US); AbuSamra, Muneer, Southern Pines NC 28387 (US)

(56) Entgegenhaltungen:
- EP-A- 0 459 273
- WO-A-98/46445
- DE-A1- 10 150 597
- US-A- 5 056 639
- US-A- 5 424 941

## Beschreibung

Die Erfindung betrifft ein Verfahren zum Betreiben einer automatischen Kupplungseinrichtung gemäß dem Oberbegriff des Patentanspruchs 1.

Im Antriebsstrang eines Fahrzeugs zwischen einer Antriebsmaschine und einem Getriebe angeordnete automatische Kupplungseinrichtungen sind seit langem bekannt. So offenbart die EP 0 371 975 B1 eine Kupplungseinrichtung bzw. Kupplung für Kraftfahrzeuge, die durch Federkraft geschlossen beziehungsweise eingerückt und mittels Magnetventile angesteuerter druckbeaufschlagbarer Kolben-Zylinder-Einheiten geöffnet beziehungsweise ausgerückt wird. Als Druckmittel kann sowohl Luft als auch ein Fluid, wie Hydraulik- oder Bremsöl dienen.

Damit die Schließfeder wirken kann, muss der Druckraum der Kolben-Zylinder-Einheiten entlüftet werden. Hierzu werden die Magnetventile bzw. deren Stellglieder von einer elektronischen Steuereinheit angesteuert. Die maximale Öffnungsgeschwindigkeit kann über Blenden durch Querschnittsveränderungen der Druckleitungen eingestellt werden. Es wird ferner vorgeschlagen, je Magnetventil zwei Blenden zum Befüllen bzw. zum Entlüften des Druckraumes vorzusehen, die unterschiedlich lange im Pulsmodulationsverfahren geöffnet werden, so dass sich fortwährend unterschiedliche Befüll- und Entlüftungsverhältnisse ergeben, weil sich durch die Veränderung der Pulsmodulation die Öffnungszeit für jedes Ventil sich zusätzlich verändern lässt.

Aus der Praxis ist es des Weiteren bekannt, dass während der Betätigung von automatischen Kupplungen so genannte Einrückstöße, auch als Gangeinschaltstöße bezeichnet, auftreten können, die sich unangenehm auf den Fahrkomfort auswirken und sich als spürbarer Ruck im Fahrzeug beim Übergang von einer offenen bzw. ausgerückten Kupplung zu einer teilgeschlossenen bzw. teilweise eingerückten Kupplung bei Drehmomentaufbau und eingelegtem Gang sowie teileingelegtem Gang (Auflösen einer Zahn-auf-Zahn-Stellung) bemerkbar machen.

Die Ursachen für diese Einrückstöße sind vielfältig und können beispielsweise aus dem Übergang von Gleit-Haftreibung an der Kupplung zu Beginn einer Einrückbewegung (Stick-Slip-Effekt), aus mechanischen Hysteresen, aus dem Verlauf der Membranfeder-Kennlinie der Kupplung, indem ein nichtlinearer Kraft-Weg-Verlauf zu verzeichnen ist (bei gleichem Ausrückkraftniveau sind verschiedene Wegpunkte möglich; Drop-Off-Effekt) und anderem mehr resultieren.

Vor diesem Hintergrund liegt der Erfindung die Aufgabe zugrunde, ein Verfahren zum Betreiben einer automatischen Kupplungseinrichtung anzugeben, mittels dem Einrückstöße vermieden, zumindest jedoch abgemildert werden können,

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass ein bevorstehender bzw. ein gerade beginnender Einschaltstoß durch Beobachtung und Analyse des zeitlichen Verlaufs des Kupplungsbetätigungsweges, also an der Kupplungsbetätigungsgeschwindigkeit im Sinne einer schnellen Einrückbewegung zu erkennen ist.

Die Erfindung betrifft daher ein Verfahren zum Betreiben einer automatischen Kupplungseinrichtung, die im Antriebsstrang zwischen einer Antriebsmaschine und einem Getriebe angeordnet ist, welche mittels Federkraft schine und einem Getriebe angeordnet ist, welche mittels Federkraft eingerückt und mittels einer druckbeaufschlagbaren Kolben-Zylinder-Einheit ausgerückt wird, wobei Ventileinheiten mit Stellgliedern zur Beaufschlagung der Kolben-Zylinder-Einheit mit einem Druckmittel und zur Entlüftung vorgesehen sind, und bei der mittels zumindest einer Sensorik eine oder mehrere Betriebsbedingungen der Kupplungseinrichtung erfasst und einer elektronischen Steuereinheit zur Beeinflussung der Stellglieder der Ventileinheiten und demgemäß der Verstellbewegung der Kupplungseinrichtung bereitgestellt werden.

Zudem ist vorgesehen, dass zur Verhinderung eines Einrückstoßes der Kupplungseinrichtung
a) laufend die aktuelle Einrückposition und Einrückgeschwindigkeit der Kupplungseinrichtung mittels der zumindest einen Sensorik erfasst werden,
b) die zumindest eine Sensorik Signale generiert, die der elektronischen Steuereinheit zugeführt werden,
c) dort die erfassten Messwerte in Form der aktuellen Einrückposition und der Ist-Einrückgeschwindigkeit der Kupplungseinrichtung mit einer abgespeicherten Soll-Position und einer zugeordneten abgespeicherten Soll-Einrückgeschwindigkeit verglichen werden, und
d) bei Erreichen einer bestimmten Soll-Position sowie Vorliegen einer bestimmten Abweichung oder eines Trends der Abweichung im Sinne eines Überschreitens der Soll-Einrückgeschwindigkeit die Ist-Einrückgeschwindigkeit der Kupplungseinrichtung auf eine vorgegebene, einen Einrückstoß der Kupplungseinrichtung verhindernde, zumindest jedoch mindernde Einrückgeschwindigkeit abgebremst wird.

In vorteilhafter Weiterbildung dieses Verfahrens wird vorgeschlagen, dass dann, wenn die Soll-Einrückgeschwindigkeit überschritten wird, eine Verringerung der Ist-Einrückgeschwindigkeit durch eine entsprechende Ansteuerung der Stellglieder der Ventileinheiten derart durchgeführt wird, dass die Entlüftungsgeschwindigkeit der Kolben-Zylinder-Einheit gemindert wird.

Weiter wird vorgeschlagen, dass dann, wenn die Soll-Einrückgeschwindigkeit überschritten wird, eine Verringerung der Ist-Einrückgeschwindigkeit durch eine entsprechende Ansteuerung der Stellglieder der Ventileinheiten derart durchgeführt wird, dass nach Art eines auf die Kolben-Zylinder-Einheit aufgebrachten Gegenpulses die Entlüftung kurzzeitig unterbrochen wird.

Des Weiteren kann dann, wenn die Soll-Einrückgeschwindigkeit überschritten wird, eine Verringerung der Ist-Einrückgeschwindigkeit durch eine entsprechende Ansteuerung der Stellglieder der Ventileinheiten auch derart durchgeführt werden, dass nach Art eines auf die Kolben-Zylinder-Einheit aufgebrachten Gegenpulses die Entlüftung durch kurzzeitige Druckbeaufschlagung der Kolben-Zylinder-Einheit unterbrochen wird.

In Fortbildung des Verfahrens ist vorgesehen, dass die Verringerung der Einrückgeschwindigkeit beendet wird, sobald die zu schnelle Einrückbewegung unterbrochen ist oder/und die erforderliche Soll-Einrückgeschwindigkeit erreicht wird.

Weiterhin ist bevorzugt vorgesehen, dass zur Vermeidung von Schwingungen im Kupplungssystem die Verringerung der Einrückgeschwindigkeit nur einmalig je Einrückvorgang durchgeführt wird.

Schließlich wird vorgeschlagen, dass als Sensorik eine Weg-Zeit-Messeinrichtung verwendet wird. Diese umfasst im einfachsten Fall eine den Kupplungsbetätigungsweg erfassenden Weg-Sensor und eine Uhr.

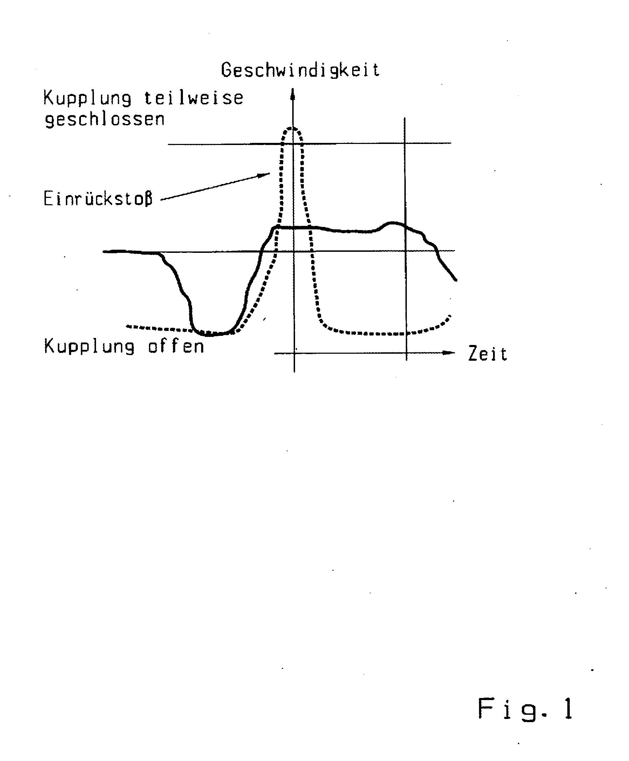

Zur Verdeutlichung des Verfahrens gemäß der Erfindung ist in der einzigen Figur ein Diagramm dargestellt, welches die Kupplungsbetätigungsbewegung sowohl für eine herkömmlich betriebene als auch eine erfindungsgemäß betriebene Kupplungseinrichtung darstellt.

Automatische Kupplungseinrichtungen, die im Antriebsstrang zwischen einer Antriebsmaschine, beispielsweise eines Kraftfahrzeugs, und einem Getriebe angeordnet sind, werden bekanntermaßen mittels Federkraft eingerückt und mittels einer fremdkraftbetriebenen, z. B. pneumatisch oder hydraulisch betriebenen Aktuatorik, ausgerückt. Diese Aktuatorik besteht aus zumindest einer Kolben-Zylinder-Einheit, überwiegend aus einem Geberzylinder und einem daran angeschlossenen Nehmerzylinder, der seinerseits den Kupplungsausrücker an sich darstellt. Ferner sind Ventileinheiten mit Stellgliedern zur Beschickung der Kolben-Zylinder-Einheit mit einem Druckmittel und zur Entlüftung vorgesehen (nicht näher dargestellt).

Wie bereits oben erwähnt, können während der Betätigung von automatischen Kupplungen so genannte Einrückstöße auftreten, die sich unangenehm auf den Fahrkomfort auswirken und sich als spürbarer Ruck im Fahrzeug beim Übergang von einer offenen bzw. ausgerückten Kupplung zu einer teilgeschlossenen bzw. teilweise eingerückten Kupplung bei Drehmomentaufbau und eingelegtem bzw. teileingelegtem Gang (Auflösen einer Zahn-auf-Zahn-Stellung) bemerkbar machen.

Diese Einrückstöße können beispielsweise aus dem Übergang von Gleitreibung in Haftreibung im Kupplungsausrückmechanismus zu Beginn einer Einrückbewegung (Stick-Slip-Effekt), aus mechanischen Hysteresen und/oder aus einer Membranfeder-Kennlinie mit einem nichtlinearen Kraft-Weg-Verlauf herrühren. Ein derartiger Einrückstoß ist für ein konventionelles Kupplungsbetätigungsverfahren in dem gestrichelten Kurvenverlauf des Diagramms durch einen steilen Anstieg der Kurve dargestellt.

Um diesem nachteiligen Einrückstoß nunmehr wirkungsvoll zu begegnen, ist es zunächst angezeigt, laufend die aktuelle Position und Einrückgeschwindigkeit der Kupplungseinrichtung mittels zumindest einer Sensorik zu erfassen. Als Sensorik bietet sich eine an sich bekannte Weg-Zeit-Messeinrichtung an, die mit einer elektronischen Steuereinheit signaltechnisch verbunden ist.

Die von der Sensorik generierten Signale der erfassten Messwerte in Form der aktuellen Einrückposition und der Ist-Einrückgeschwindigkeit der Kupplungseinrichtung werden nachfolgend in der elektronischen Steuereinheit mit einer vorbestimmten Soll-Position und einer zugeordneten Soll-Einrückgeschwindigkeit verglichen.

Gesetzt den Fall, dass bei Erreichen einer bestimmten Soll-Position ist eine Abweichung oder ein Trend zur Abweichung im Sinne eines Überschreitens der Soll-Einrückgeschwindigkeit zu verzeichnen, so wird die Ist-Einrückgeschwindigkeit der Kupplungseinrichtung, wie in dem Diagramm mit der durchgezogenen Line gezeichneten Kurvenlauf dargestellt, erfindungsgemäß auf eine vorgegebene, einen Einrückstoß der Kupplungseinrichtung verhindernde, zumindest jedoch mindernde Einrückgeschwindigkeit abgebremst bzw. reduziert.

Diesem Verfahrensschritt wird insbesondere dadurch Rechnung getragen, dass die Stellglieder der an sich bekannten und einleitend bereits beschriebenen Ventileinheiten in Form von beispielsweise Magnetventilen mittels geeigneter Steuersignale der elektronischen Steuereinheit derart angesteuert werden, dass die Entlüftungsgeschwindigkeit der Kolben-Zylinder-Einheit der Kupplungseinrichtung gemindert wird.

Möglich ist es auch und wird durch die Erfindung mit erfasst, die Ansteuerung der Stellglieder der Ventileinheiten derart durchzuführen, dass nach Art eines auf die Kolben-Zylinder-Einheit aufgebrachten Gegenpulses die Entlüftung sozusagen kurzzeitig unterbrochen wird.

In einer Fortbildung dieses Verfahrensschrittes kann die Entlüftung auch durch eine kurzzeitige Druckbeaufschlagung der Kolben-Zylinder-Einheit kurzzeitig unterbrochen werden. Unter dem Begriff "kurzzeitig" wird hierbei verstanden, dass die Abbremsung bzw. Reduzierung der Einrückgeschwindigkeit aufgehoben wird, sobald die zu schnelle Einrückbewegung beseitigt und/oder die erforderliche Soll-Einrückgeschwindigkeit erreicht ist. Dies wird mittels der Sensorik und der angeschlossenen elektronischen Steuereinheit an dem Wert des Kupplungspositionssignals und seinen abgeleiteten Größen wie Geschwindigkeit und Beschleunigung erkannt.

Zur Verhinderung von Schwingungen in der Kupplungseinrichtung infolge der definierten Beeinflussung der Stellglieder der Ventileinheiten und demgemäß der Verstellbewegung der Kupplungseinheiten wird die besagte Minderung der Einrückgeschwindigkeit lediglich einmal je Einrückvorgang durchgeführt und zweckmäßigerweise anschließend steuerungstechnisch bzw. softwaretechnisch verriegelt, jedoch bei einem neuerlich erforderlichen Einrückvorgang wieder freigeschaltet.

## Patentansprüche

1. Verfahren zum Betreiben einer automatischen Kupplungseinrichtung, die im Antriebsstrang zwischen einer Antriebsmaschine und einem Getriebe angeordnet ist, die mittels Federkraft eingerückt und mittels einer druckbeaufschlagbaren Kolben-Zylinder-Einheit ausgerückt wird, wobei Ventileinheiten mit Stellgliedern zur Beaufschlagung der Kolben-Zylinder-Einheit mit einem Druckmittel und zur Entlüftung vorgesehen sind, und bei der mittels zumindest einer Sensorik eine oder mehrere Betriebsbedingungen der Kupplungseinrichtung erfasst und einer elektronischen Steuereinheit zur Beeinflussung der Stellglieder der Ventileinheiten und demgemäß der Verstellbewegung der Kupplungseinrichtung bereitgestellt werden, **dadurch gekennzeichnet, dass** zur Verhinderung eines Einrückstoßes der Kupplungseinrichtung
e) laufend die aktuelle Einrückposition und Einrückgeschwindigkeit der Kupplungseinrichtung mittels der zumindest einen Sensorik erfasst werden,
f) die zumindest eine Sensorik Signale generiert, die der elektronischen Steuereinheit zugeführt werden,
g) dort die erfassten Messwerte in Form der aktuellen Einrückposition und der Ist-Einrückgeschwindigkeit der Kupplungseinrichtung mit einer Soll-Position und einer Soll-Einrückgeschwindigkeit verglichen werden, und
h) bei Erreichen einer bestimmten Soll-Position und Vorliegen einer bestimmten Abweichung oder eines Trends der Abweichung im Sinne eines Überschreitens der Soll-Einrückgeschwindigkeit die Ist-Einrückgeschwindigkeit der Kupplungseinrichtung auf eine vorgegebene, einen Einrückstoß der Kupplungseinrichtung verhindernde, zumindest jedoch mindernde Einrückgeschwindigkeit abgebremst wird.

2. Verfahren nach Anspruch 1, **dadurch gekennzeichnet, dass** dann, wenn die Soll-Einrückgeschwindigkeit überschritten wird, eine Verringerung der Ist-Einrückgeschwindigkeit durch entsprechende Ansteuerung der Stellglieder der Ventileinheiten derart durchgeführt wird, dass die Entlüftungsgeschwindigkeit der Kolben-Zylinder-Einheit reduziert wird.

3. Verfahren nach Anspruch 1, **dadurch gekennzeichnet, dass** dann, wenn die Soll-Einrückgeschwindigkeit überschritten wird, eine Verringerung der Ist-Einrückgeschwindigkeit durch entsprechende Ansteuerung der Stellglieder der Ventileinheiten derart durchgeführt wird, dass nach Art eines auf die Kolben-Zylinder-Einheit aufgebrachten Gegenpulses die Entlüftung kurzzeitig unterbrochen wird.

4. Verfahren nach Anspruch 3, **dadurch gekennzeichnet, dass** dann, wenn die Soll-Einrückgeschwindigkeit überschritten wird, eine Verringerung der Ist-Einrückgeschwindigkeit durch entsprechende Ansteuerung der Stellglieder der Ventileinheiten derart durchgeführt wird, dass nach Art eines auf die Kolben-Zylinder-Einheit aufgebrachten Gegenpulses die Entlüftung durch kurzzeitige Druckbeaufschlagung der Kolben-Zylinder-Einheit unterbrochen wird.

5. Verfahren nach zumindest einem der Ansprüche 1 bis 4, **dadurch gekennzeichnet, dass** die Verringerung der Einrückgeschwindigkeit beendet wird, sobald die zu schnelle Einrückbewegung beendet ist oder/und die erforderliche Soll-Einrückgeschwindigkeit erreicht wird.

6. Verfahren nach zumindest einem der Ansprüche 1 bis 5, **dadurch gekennzeichnet, dass** zur Vermeidung von Schwingungen im Kupplungssystem die Verringerung der Einrückgeschwindigkeit nur einmalig je Einrückvorgang durchgeführt wird.

7. Verfahren nach zumindest einem der Ansprüche 1 bis 6, **dadurch gekennzeichnet, dass** als Sensorik eine Weg-Zeit-Messeinrichtung verwendet wird.

## Claims

1. Method for operating an automatic clutch device which is arranged in the drivetrain between an engine and a transmission and which is engaged by means of spring force and disengaged by means of a pressure-loadable piston/cylinder unit, valve units with the actuating members for loading the piston/cylinder unit with a pressure medium and for venting being provided, and in which, by means of at least one sensor assembly, one or more operating conditions of the clutch device are detected and are provided for an electronic control unit for the purpose of influencing the actuating members of the valve units and therefore the adjusting movement of the clutch device, **characterized in that**, to prevent an engagement jolt of the clutch device,
e) the current engagement position and engagement speed of the clutch device are detected continuously by means of the at least one sensor assembly,
f) the at least one sensor assembly generates signals which are fed to the electronic control unit,
g) the detected measurement values in the form of the current engagement position and of the actual engagement speed of the clutch device are compared there with a desired position and a desired engagement speed, and
h) when a specific desired position is reached and in the presence of a specific deviation or a trend of the deviation towards an overshooting of the desired engagement speed, the actual engagement speed of the clutch device is braked to a predetermined engagement speed which prevents, but at least mitigates, an engagement jolt of the clutch device.

2. Method according to Claim 1, **characterized in that**, when the desired engagement speed is overshot, a reduction in the actual engagement speed is carried out by means of a corresponding activation of the actuating members of the valve units, in such a way that the venting speed of the piston/cylinder unit is reduced.

3. Method according to Claim 1, **characterized in that**, when the desired engagement speed is overshot, a reduction in the actual engagement speed is carried out by means of a corresponding activation of the actuating members of the valve units, in such a way that the venting is briefly interrupted in the manner of a counterpulse applied to the piston/cylinder unit.

4. Method according to Claim 3, **characterized in that**, when the desired engagement speed is overshot, a reduction in the actual engagement speed is carried out by means of a corresponding activation of the actuating members of the valve units, in such a way that the venting is interrupted by a brief loading of the piston/cylinder unit with pressure in the manner of a counterpulse applied to the piston/cylinder unit.

5. Method according to at least one of Claims 1 to 4, **characterized in that** the reduction in the engagement speed is terminated as soon as the too rapid engagement movement is terminated and/or the required desired engagement speed is reached.

6. Method according to at least one of Claims 1 to 5, **characterized in that**, to avoid oscillations in the clutch system, the reduction in the engagement speed is carried out only once per engagement action.

7. Method according to at least one of Claims 1 to 6, **characterized in that** the sensor assembly used is a path/time measurement device.

## Revendications

1. Procédé pour faire fonctionner un dispositif d'embrayage automatique, qui est disposé dans la chaîne d'entraînement entre un moteur d'entraînement et une boîte de vitesses, qui est embrayé au moyen d'une force de ressort et débrayé au moyen d'une unité cylindre-piston pouvant être sollicitée en pression, des unités de soupape avec des actionneurs pour solliciter l'unité cylindre-piston avec un fluide sous pression et pour le désaérage étant prévues, et dans lequel au moyen d'au moins un système de capteurs, une ou plusieurs conditions de fonctionnement du dispositif d'embrayage sont détectées, et sont fournies à une unité de commande électronique pour influencer les actionneurs des unités de soupape et donc le mouvement de déplacement du dispositif d'embrayage, **caractérisé en ce que** pour éviter un choc à l'embrayage du dispositif d'embrayage,
e) la position d'embrayage actuelle et la vitesse d'embrayage du dispositif d'embrayage sont détectées en continu au moyen de l'au moins un système de capteurs,
f) l'au moins un système de capteurs génère des signaux qui sont acheminés à l'unité de commande électronique,
g) les valeurs de mesure qui sont détectées y sont comparées sous forme de position d'embrayage actuelle et de vitesse d'embrayage instantanée du dispositif d'embrayage à une position de consigne et à une vitesse d'embrayage de consigne, et
h) une fois atteinte une position de consigne déterminée et en présence d'un écart déterminé ou d'une tendance vers un écart au sens d'un dépassement de la vitesse d'embrayage de consigne, la vitesse d'embrayage instantanée du dispositif d'embrayage est freinée à une vitesse d'embrayage prédéterminée, évitant, ou tout au moins réduisant un choc d'embrayage du dispositif d'embrayage.

2. Procédé selon la revendication 1, **caractérisé en ce que** lorsque la vitesse d'embrayage de consigne est dépassée, une réduction de la vitesse d'embrayage instantanée est effectuée par commande correspondante des actionneurs des unités de soupape de telle sorte que la vitesse de désaérage de l'unité cylindre-piston soit réduite.

3. Procédé selon la revendication 1, **caractérisé en ce que** lorsque la vitesse d'embrayage de consigne est dépassée, une réduction de la vitesse d'embrayage instantanée est réalisée par une commande correspondante des actionneurs des unités de soupape de telle sorte que le désaérage soit brièvement interrompu à la manière d'une contre-impulsion appliquée sur l'unité cylindre-piston.

4. Procédé selon la revendication 3, **caractérisé en ce que** lorsque la vitesse d'embrayage de consigne est dépassée, une réduction de la vitesse d'embrayage instantanée est réalisée par une commande correspondante des actionneurs des unités de soupape de telle sorte que le désaérage soit interrompu à la manière d'une contre-impulsion appliquée sur l'unité cylindre-piston par une sollicitation brève en pression de l'unité cylindre-piston.

5. Procédé selon au moins l'une quelconque des revendications 1 à 4, **caractérisé en ce que** la réduction de la vitesse d'embrayage est supprimée dès que le mouvement d'embrayage trop rapide est arrêté et/ou que la vitesse d'embrayage de consigne nécessaire est atteinte.

6. Procédé selon au moins l'une quelconque des revendications 1 à 5, **caractérisé en ce que** pour réduire les oscillations dans le système d'embrayage, on réalise la réduction de la vitesse d'embrayage seulement une seule fois par opération d'embrayage.

7. Procédé selon au moins l'une quelconque des revendications 1 à 6, **caractérisé en ce que** l'on utilise comme système de capteurs un dispositif de mesure distance-temps.
